# EUROPEAN PATENT APPLICATION

(11) **EP 2 447 314 A1**
(43) Date of publication of application: **02.05.2012**
(21) Application number: 11186317.1
(22) Date of filing: 24.10.2011
(51) Int. Cl.: C08K 5/134, C08K 5/00

(54) **Molding method of polymer stabilizer**

(30) Priority: 29.10.2010 JP 2010243439
(71) Applicant: Sumitomo Chemical Company, Limited, Tokyo 104-8260 (JP)
(72) Inventor: Suetsugu, Eiko, Osaka-shi, Osaka 554-8558 (JP)
(74) Representative: Harmsen, Dirk

(57) **Abstract**

A polymer stabilizer can be molded easily by compression-molding a compound represented by formula (1) : 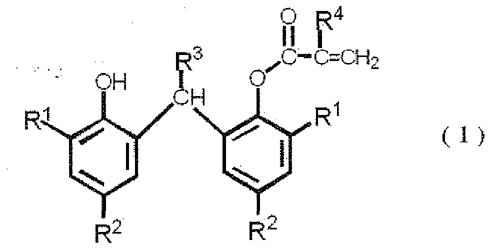 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group. Further, the polymer stabilizer molding of the present invention is capable of further improving the processing stability of a thermoplastic polymer.

## Description

### Technical Field

The present invention relates to a molding method of a polymer stabilizer, and the like.

### Background Art

JP-A No. 2010-144138 discloses a method comprising a step of melting 2-[1-(2-hydroxy-3,5-di-t-pentylphenyl)ethyl]-4,6-di-t-pentylphenyl acrylate, a step of solidifying the resultant melted material at its melting point or lower, and a step of heating the resultant solidified material under a temperature atmosphere higher than the solidification temperature and lower than the melting point, as a molding method of a polymer stabilizer.

### Disclosure of the Invention

The above-described molding method needs troublesome temperature regulation, thus, a simpler molding method is desired.

The present inventors have intensively investigated to solve the above-described problem, and resultantly found a simpler molding method of a polymer stabilizer, leading to the following inventions [1] to [7].
[1] A molding method of a polymer stabilizer, comprising a step of compression-molding a compound represented by formula (1): 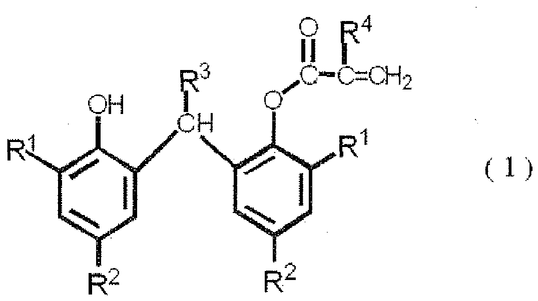 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group.
[2] A production method of a polymer stabilizer molding, comprising a step of compression-molding a compound represented by formula (1) : 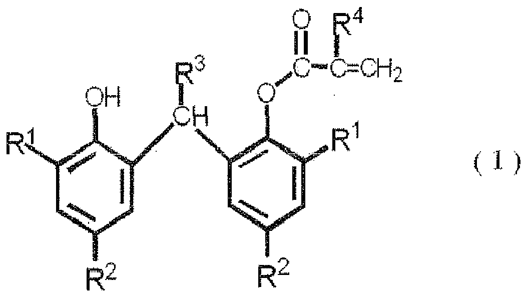 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group.
[3] The production method according to [2], wherein the compound represented by formula (1) is 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate.
[4] A polymer stabilizer molding obtained by compression-molding a compound represented by formula (1) : 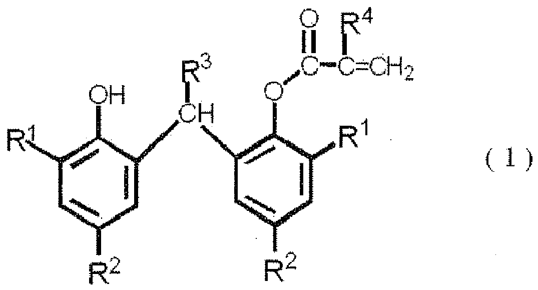 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group.
[5] The polymer stabilizer molding according to [4], wherein the compound represented by formula (1) is 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate.
[6] The polymer stabilizer molding according to [4] or [5] in the form of flake.
[7] Use of the polymer stabilizer molding according to any one of [4] to [6], for a thermoplastic polymer.

[1-2] A molding method of a polymer stabilizer, comprising a step of compression-molding a compound represented by formula (1) : 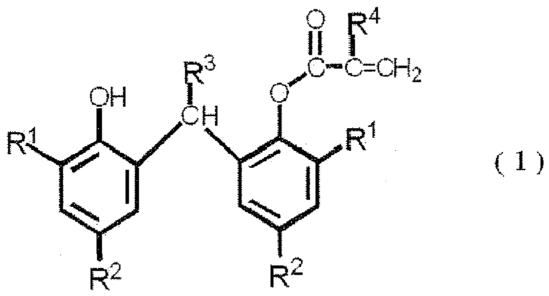 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group;
   by a press molding machine under conditions of 10 to 70 °C and 2 MPa to 40 MPa.
[1-3] A molding method of a polymer stabilizer, comprising a step of compression-molding 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate by a press molding machine under conditions of 10 to 70°C and 2 MPa to 40 MPa.
[2-2] A production method of a polymer stabilizer molding, comprising a step of compression-molding a compound represented by formula (1) : 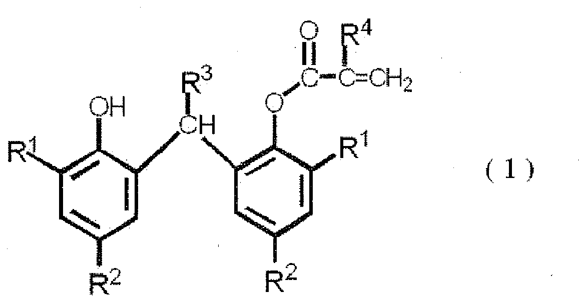 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group; by a press molding machine under conditions of 10 to 70°C and 2 MPa to 40 MPa.
[3-2] A production method of a polymer stabilizer molding, comprising a step of compression-molding 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate by a press molding machine under conditions of 10 to 70°C and 2 MPa to 40 MPa.
[4-2] A polymer stabilizer molding obtained by compression molding of a compound represented by formula (1) : 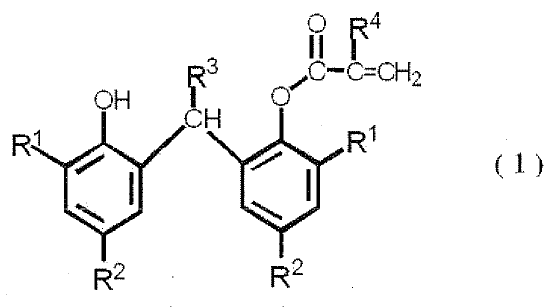 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group;
   under conditions of 10 to 70°C and 2 MPa to 40 MPa.
[5-2] A polymer stabilizer molding obtained by compression molding of 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate under conditions of 10 to 70°C and 2 MPa to 40 MPa.

The present invention will be illustrated in detail below.

### <Compound represented by formula (1) (hereinafter, referred to as compound (1) in some cases)>

In the compound (1), R¹ and R² in formula represent each independently an alkyl group having 1 to 8 carbon atoms, an aryl group having 6 to 12 carbon atoms or an aralkyl group having 7 to 18 carbon atoms. R¹ and R² include alkyl groups having 1 to 8 carbon atoms such as, for example, a methyl group, ethyl group, n-propyl group, isopropyl group, n-butyl group, isobutyl group, sec-butyl group, t-butyl group, n-pentyl group, t-pentyl group, 2-ethylhexyl group, cyclohexyl group and the like, aryl groups having 6 to 12 carbon atoms such as, for example, a phenyl group and the like, aralkyl groups having 7 to 18 carbon atoms such as, for example, a benzyl group and the like; etc.

Preferably, alkyl groups having tertiary carbon such as a t-butyl group, t-pentyl group and the like are mentioned, and more preferable is a t-pentyl group.

R³ represents a hydrogen atom or an alkyl group having 1 to 3 carbon atoms. The alkyl group includes, for example, a methyl group, ethyl group, n-propyl group and isopropyl group. Preferably, R³ represents a hydrogen atom or a methyl group.

R⁴ represents a hydrogen atom or a methyl group, preferably a hydrogen atom.

Exemplified as the compound (1) are, for example, 2-[1-(2-hydroxy-3,5-di-t-pentylphenyl)ethyl]-4,6-di-t-pentylphenyl acrylate, 2-[1-(2-hydroxy-3,5-di-t-pentylphenyl)ethyl]-4,6-di-t-pentylphenyl methacrylate, 2-(2-hydroxy-3,5-di-t-pentylbenzyl)-4,6-di-t-pentylphenyl acrylate, 2,4-di-t-butyl-6-[1-(3,5-di-t-butyl-2-hydroxyphenyl)ethyl]phenyl acrylate, 2,4-di-t-butyl-6-(3,5-di-t-butyl-2-hydroxybenzyl)phenyl acrylate, 2,4-di-t-butyl-6-[1-(3,5-di-t-butyl-2-hydroxyphenyl)ethyl]phenyl methacrylate, 2-t-butyl-6-(3-t-butyl-2-hydroxy-5-methylbenzyl)-4-methylphenyl acrylate, 2-t-butyl-6-[1-(3-t-butyl-2-hydroxy-5-methylphenyl)ethyl]-4-methylphenyl acrylate, 2-t-butyl-6-(3-t-butyl-2-hydroxy-5-methylbenzyl)-4-methylphenyl methacrylate, 2-t-butyl-6-[1-(3-t-butyl-2-hydroxy-5-methylphenyl)propyl]-4-methylphenyl acrylate, 2-t-butyl-6-(3-t-butyl-5-ethyl-2-hydroxybenzyl)-4-ethylphenyl acrylate, 2-t-butyl-6-[1-(3-t-butyl-2-hydroxy-5-propylphenyl)ethyl]-4-propylphenyl acrylate, 2-t-butyl-6-[1-(3-t-butyl-2-hydroxy-5-isopropylphenyl)ethyl]-4-isopropylphenyl acrylate and the like.

Preferably, 2-[1-(2-hydroxy-3,5-di-t-pentylphenyl)ethyl]-4,6-di-t-pentylphenyl acrylate, 2-t-butyl-6-(3-t-butyl-2-hydroxy-5-methylbenzyl)-4-methylphenyl acrylate, 2,4-di-t-butyl-6-[1-(3,5-di-t-butyl-2-hydroxyphenyl)ethyl]phenyl acrylate, 2-t-butyl-6-[1-(3-t-butyl-2-hydroxy-5-methylphenyl)ethyl]-4-methylphenyl acrylate, 2-t-butyl-6-[1-(3-t-butyl-2-hydroxy-5-methylphenyl)propyl]-4-methylphenyl acrylate, 2-t-butyl-6-[1-(3-t-butyl-2-hydroxy-5-propylphenyl)ethyl]-4-propylphenyl acrylate and 2-t-butyl-6-[1-(3-t-butyl-2-hydroxy-5-isopropylphenyl)ethyl]-4-isopropylphenyl acrylate are mentioned.

More preferable is 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate.

2-[1-(2-hydroxy-3,5-di-t-pentylphenyl)ethyl]-4,6-dit-pentylphenyl acrylate is commercially available as Sumilizer GS (F) (registered trademark, manufactured by Sumitomo Chemical Co., Ltd.), and 2-t-butyl-6-(3-t-butyl-2-hydroxy-5-methylbenzyl)-4-methylphenyl acrylate is commercially available as Sumilizer GM (registered trademark, manufactured by Sumitomo Chemical Co., Ltd.).

### <Molding method>

Both the molding method and the production method of a molding of the present invention comprise a step of compression-molding a compound (1). Further, a step of crushing the resultant molding into suitable size and a step of molding this may also be comprised.

In compression molding of a compound (1) in the present invention, additives described later other than the compound (1) may also be added if necessary.

Compression molding may be dry mode or wet mode, and a dry mode method is preferable. Dry mode compression molding can be carried out using a compression molding machine such as, for example, a briquetting machine, single punch tablet machine, rotary tablet machine, press molding machine and the like.

The operation pressure in compression molding varies depending on the kind of a compression molding machine. For example, if a briquetting machine is used, the operation pressure is preferably 1 t/cm to 15 t/cm, more preferably 1 t/cm to 10 t/cm. For example, if a single punch tablet machine is used, the operation pressure is preferably 1 kN to 55 kN, more preferably 20 kN to 55 kN. For example, if a rotary tablet machine is used, the operation pressure is preferably 1 kN to 60 kN, more preferably 5 kN to 50 kN. For example, if a press molding machine is used, the operation pressure is preferably 1 MPa to 80 MPa, more preferably 2 MPa to 40 MPa.

Compression molding is preferably carried out at a temperature of 0 to 80°C, more preferably carried out at a temperature of 10 to 70°C.

### <Polymer stabilizer molding>

The polymer stabilizer molding of the present invention obtained by compression molding of a compound (1) preferably contains a compound (1) in an amount of 60 to 100 wt%. The molding more preferably contains a compound (1) in an amount of 70 to 100 wt%, further preferably contains a compound (1) in an amount of 80 to 100 wt%. As the compound (1), several different kinds of compounds (1) may be used.

The polymer stabilizer molding of the present invention may contain additives other than the compound (1). Such additives include, for example, an antioxidant, ultraviolet absorber, light stabilizer, metal deactivator, nucleating agent, lubricant, antistatic agent, flame retardant, filler, pigment, inorganic filler and the like. Specific examples of these additives include those described in JP-A No. 2010-43175. The amount of these additives contained in the polymer stabilizer is preferably 0 to 40 wt%, more preferably 0 to 30 wt%, further preferably 0 to 20 wt%.

The shape of the polymer stabilizer molding of the present invention is, for example, flake, plate, bar, circular disk, approximate sphere, approximate semisphere or the like. A flake shape is preferable.

The bulk density of the polymer stabilizer molding of the present invention measured according to JIS K7365 is preferably 0.1 g/mL to 1 g/mL, more preferably 0.2 g/mL to 0.8 g/mL. Regarding the particle size distribution of the polymer stabilizer molding of the present invention measured according to JIS K0069, the proportion of those having a particle size of 0.5 mm to 2.36 mm is preferably 30% or more based on the total amount, more preferably 60% or more based on the total amount.

### <Use polymer stabilizer molding for thermoplastic polymer >

Use of the polymer stabilizer molding of the present invention for a thermoplastic polymer is carried out, for example, by melt-kneading the polymer stabilizer molding into a thermoplastic polymer. By this, the processing stability of the thermoplastic polymer can be improved.

The thermoplastic polymer includes polyethylene resins (high density polyethylene (HD-PE), low density polyethylene (LD-PE), linear low density polyethylene (LLDPE), ethylene-vinyl alcohol copolymer (EVOH), ethylene-ethyl acrylate copolymer, ethylene-vinyl acetate copolymer (EVA) and the like), polypropylene resins (crystalline propylene homopolymer, propyleneethylene-random copolymer, propylene-α-olefin random copolymer, propylene-ethylene-α-olefin copolymer; polypropylene block copolymer composed of propylene homopolymer component or copolymer component mainly composed of propylene, and propylene, and ethylene and/or α-olefin copolymer component; and the like), methylpentene polymer, polystyrene resins (polystyrenes such as poly(p-methylstyrene), poly(α-methylstyrene) and the like; acrylonitrile-styrene copolymer, acrylonitrile-butadiene-styrene copolymer (ABS), special acrylic rubber-acrylonitrile-styrene copolymer, acrylonitrile-chlorinated polyethylene-styrene copolymer and the like), polybutadiene resins (polybutadiene rubber (BR), styrenebutadiene copolymer (SBR), styrene butadiene block copolymer (SBS), high impact polystyrene (HI-PS) modified with BR or SBR or SBS; and the like), chlorinated polyethylene, polychloroprene, chlorinated rubber, polyvinyl chloride, polyvinylidene chloride, methacrylic resin, fluorine resin, polyacetal, grafted polyphenylene ether resin, polyphenylene sulfide resin, polyurethane, polyamide, polyester resins (for example, polyethylene terephthalate, polybutylene terephthalate and the like), polylactic resin (PLA), polycarbonate, polyacrylate, polysulfone, polyether ether ketone, polyether sulfone, aromatic polyester resin, diallyl phthalate prepolymer, silicone resin, 1,2-polybutadiene, polyisoprene, butadiene/acrylonitrile copolymer, ethylene-methyl methacrylate copolymer and the like, and from the standpoint of good molding processability, preferable are polyethylene resins, polypropylene resins, polystyrene resins and polybutadiene resins, more preferable are polyethylene resins and polybutadiene resins.

The polymer stabilizer molding of the present invention may be compounded in an amount of usually 2 parts by weight or less with respect to 100 parts by weight of a thermoplastic polymer, specifically 0.01 parts by weight or more and 2 parts by weight or less, preferably 0.01 part by weight or more and 1 part by weight or less. When the amount is 2 parts by weight or less, there is a preferable tendency of suppression of so-called bleeding phenomenon in which the stabilizer appears on the surface of the thermoplastic polymer composition.

### EXAMPLES

The present invention will be illustrated further in detail by examples and comparative examples mentioned below, but the present invention is not limited to them.

Parts and % are by weight unless otherwise stated.

In the following examples and comparative examples, 2-[1-(2-hydroxy-3,5-di-t-pentylphenyl)ethyl]-4,6-di-t-pentylphenyl acrylate (hereinafter, described as compound (1-1) in some cases) was used as the compound (1).

### Production Example

Into a four-necked flask equipped with a thermometer, a stirrer and a cooling tube was charged 494.8 g (1.0 mol) of 2,2'-ethylidenebis(4,6-di-t-pentylphenol), 72.1 g (1.0 mol) of acrylic acid, 400 g of n-heptane and 212.5 g (2.1 mol) of triethylamine, an atmosphere in the vessel was purged with nitrogen, then, 107.3 g (0.7 mol) of phosphorus oxychloride was dropped while stirring. After completion of dropping, the reaction mixture was thermally insulated at 80°C for 1 hour, then, 500 g of water was charged, and the mixture was washed with water at 60°C and liquid-separated. Washing with water and liquid separation of the oil layer portion were repeated until attaining neutral, the oil layer was cooled down to 5°C while stirring, to cause deposition of a crystal. At the same time, stirring was further carried out, to case deposition of a crystal, then, the crystal was filtrated, washed with cold n-heptane, and dried under reduced pressure to obtain 235.6 g of a crystalline powdered compound (1-1).

### Example 1

Zero point five grams (0.5 g) of the crystalline powdered compound (1-1) obtained in Production Example was sandwiched between aluminum plates, and pressed for 10 seconds under conditions of 25 to 30°C and 9.8 MPa using, as a compression molding machine, an oil hydraulic press (type DEW5040, manufactured by Kansai Roll Co., Ltd.) which is a press molding machine. The resultant molding was crushed to obtain a polymer stabilizer molding in the form of flake of the present invention (bulk density: 0.51 g/mL, particle size distribution: the proportion of those having a particle size of 0.5 mm to 2.36 mm was 62% with respect to the total amount).

### Comparative Example 1

The crystalline powdered compound (1-1) obtained in Production Example was melted by heating up to 140°C in a vessel while stirring, then, the melted material of the compound (1-1) was dropped onto an aluminum plate adjusted to 25°C and cooled to 50°C or lower, obtaining a solidified material. The solidified material was kept at about 25°C for 1.5 hours, then, heated again for 5 minutes in a drying vessel of 110°C. The product was taken out of the drying vessel, and cooled again at 25°C, to obtain 2-[1-(2-hydroxy-3,5-di-t-pentylphenyl)ethyl]-4,6-di-t-pentylphenyl acrylate in the form of approximate semisphere having a particle size of 3.3 mm and a height of 2 mm.

### Example 2

One hundred (100) parts of a styrene-butadiene block copolymer (manufactured by Denki Kagaku Kogyo Kabushiki Kaisha) as a thermoplastic polymer and 0.3 parts of the polymer stabilizer molding obtained in Example 1 were dry-blended, then, the resultant resin composition was kneading-extruded using a single screw extruder (manufactured by Tanabe Plastics Machinery Co., Ltd., VS30-28 type extruder) having a screw diameter of 30 mm under conditions of 230°C and a screw rotation speed of 50 rpm to obtain a strand, which was cut by a pelletizer to obtain pallets of a thermoplastic polymer composition.

### Comparative Example 2

Pellets of a thermoplastic polymer composition were obtained in the same manner as in Example 2, excepting that 0.3 parts of the approximately semispherical 2-[1-(2-hydroxy-3,5-di-t-pentylphenyl)ethyl]-4,6-di-t-pentylphenyl acrylate obtained in Comparative Example 1 was used instead of the polymer stabilizer molding obtained in Example 1, in Example 2.

### Test Example 1 (processing stability test)

The pellets obtained in Example 2 and Comparative Example 2 were subjected to a retention MFR test for evaluation of processability in operation in extrusion molding. In the test, the temperature in a cylinder of Meltindexer (L217-E14011, manufactured by Techno Seven Co., Ltd.) was adjusted to 270°C, a thermoplastic polymer composition was filled in the cylinder and MFR was measured under a load of 2.16 kg, then, the thermoplastic polymer composition was allowed to reside in the cylinder for 30 minutes, then, MFR was measured under a load of 2.16 kg, according to JIS K 7210. The results are shown in Table 1.

In the case of a styrene-butadiene block copolymer, larger the MFR value after retention for 30 minutes, more excellent processability.

**Table 1**

| | MFR value after retention for 30 minutes |
|---|---|
| Example 2 | 1.61 |
| Comparative Example 2 | 1.30 |

### Industrial Applicability

According to the present invention, a polymer stabilizer can be molded easily. Further, the polymer stabilizer molding of the present invention is capable of further improving the processing stability of a thermoplastic polymer.

## Claims

1. A molding method of a polymer stabilizer, comprising a step of compression-molding a compound represented by formula (1) : 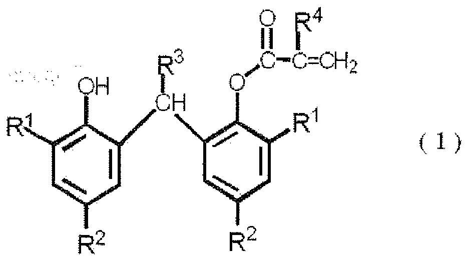 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group.

2. A production method of a polymer stabilizer molding, comprising a step of compression-molding a compound represented by formula (1) : 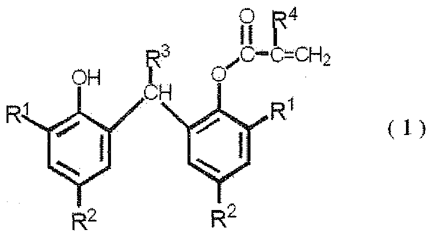 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group.

3. The production method according to Claim 2, wherein the compound represented by formula (1) is 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate.

4. A polymer stabilizer molding obtained by compression molding of a compound represented by formula (1) : 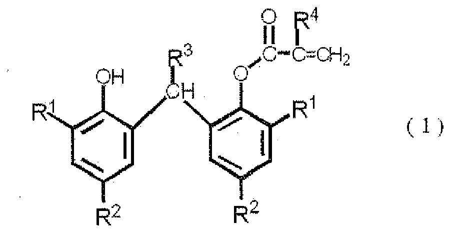 wherein, R¹ and R² represent each independently an alkyl group having 1 to 8 carbon atoms, an aryl group having 6 to 12 carbon atoms or an aralkyl group having 7 to 18 carbon atoms; R³ represents a hydrogen atom or an alkyl group having 1 to 3 carbon atoms, and R⁴ represents a hydrogen atom or a methyl group.

5. The polymer stabilizer molding according to Claim 4, wherein the compound represented by formula (1) is 2-[1-(2-hydroxy-3,5-di-t-pentylphenyl)ethyl]-4,6-di-t-pentylphenyl acrylate or 2-t-butyl-6-(3-t-butyl-2-hydroxy-5-methylbenzyl)-4-methylphenyl acrylate.

6. The polymer stabilizer molding according to Claim 5 or 6 in the form of flake.

7. Use of the polymer stabilizer molding according to Claim 4 for a thermoplastic polymer.
